# EUROPÄISCHE PATENTANMELDUNG

(11) **EP 3 375 547 A1**
(43) Veröffentlichungstag der Anmeldung: **19.09.2018**
(21) Anmeldenummer: 18000069.7
(22) Anmeldetag: 29.01.2018
(51) Int. Cl.: B22D 17/14

(54) **VENTILEINRICHTUNG ZUM ENTLÜFTEN VON DRUCKGIESSFORMEN**

(30) Priorität: 16.03.2017 CH 321172017
(71) Anmelder: Fondarex S.A., 1806 St. Légier (CH)
(72) Erfinder: Baumgartner, Dominik, CH-1820 Territet (CH)
(74) Vertreter: Hering, Hartmut

(57) **Zusammenfassung**

Die Ventileinrichtung (1) zum Entlüften von Druckgiessformen weist ein Ventilgehäuse (2) und einen zwischen einem Einlass und einem Auslass verlaufenden Entlüftungskanal auf. In dem Entlüftungskanal sind ein giessmaterialbetätigter Kraftaufnehmer (10) und zumindest zwei damit in Wirkverbindung stehende Entlüftungsventile angeordnet. Jedes Entlüftungsventil umfasst einen Ventilkolben (19, 25). Der Kraftaufnehmer (10) ist mit radialen Fortsätzen (14, 15) versehen, welche in eine entsprechende Ausnehmung (21, 27) des jeweiligen Ventilkolbens (19, 25) eingreifen und eine direkte Kopplung des jeweiligen Entlüftungsventils mit dem Kraftaufnehmer (10) bewirken.

## Beschreibung

Die Erfindung betrifft eine Ventileinrichtung zum Entlüften von Druckgiessformen nach dem Oberbegriff des Anspruchs 1.

Um beim Druckgiessen Luft- bzw. Gaseinschlüsse im fertigen Gussteil zuverlässig verhindern zu können, wird die Giessform bzw. deren Formhohlraum -Kavität- während des Giessvorgangs zwangsweise entlüftet. Dabei muss nicht nur die in den Hohlräumen der Giessmaschine und der Giessform vorhandene Luft entweichen können, sondern es muss darüber hinaus auch sichergestellt werden, dass auch die aus der flüssigen Giessmasse austretenden Gase entweichen können.

Aus der EP 0 612 573 A2 ist eine Ventileinrichtung zum Entlüften von Druckgiessformen bekannt. Die Ventileinrichtung weist einen mit dem Formhohlraum der Druckgiessform zu verbindenden Entlüftungskanal, ein im Entlüftungskanal angeordnetes Entlüftungsventil und eine Betätigungsvorrichtung zum Schliessen des Entlüftungsventils auf. Die Betätigungsvorrichtung umfasst einen giessmaterialbetätigten Kraftaufnehmer und ein Kraftübertragungsorgan zum Übertragen der Schliessbewegung vom Kraftaufnehmer auf das Entlüftungsventil. Die Ventileinrichtung wird vorzugsweise mit einer Vakuumanlage verbunden, welche eine zwangsweise Entlüftung der Druckgiessform ermöglicht.

Aus der DE 27 51 431 A1 ist eine weitere gattungsgemässe Entlüftungsventileinrichtung für Druckgiessformen bekannt, welche mit zwei Entlüftungsventilen versehen ist. Jedes Entlüftungsventil weist einen axial verschiebbaren Entlüftungskolben auf. Die Betätigungsvorrichtung umfasst fünf giessmaterialbetätigte Betätigungskolben, welche auf einen axial verschiebbaren Übertragungskolben einwirken, der seinerseits eine Mitnehmerscheibe trägt. Die Betätigungskolben wie auch der Übertragungskolben sind unterhalb der beiden Entlüftungsventile angeordnet. Die Mitnehmerscheibe greift formschlüssig in eine Ringnut des jeweiligen Entlüftungskolbens ein, wodurch die betätigten Teile in der Art von Mitnehmern miteinander verbunden sind. Der Übertragungskolben ist axial bewegbar in einem Zylinder angeordnet. In diesen Zylinder mündet eine von einer Druckquelle kommende Druckmittelleitung. Damit kann die Funktionsweise des Entlüftungsventils vor dem Giessvorgang überprüft werden.

Die Aufgabe der Erfindung besteht darin, eine dem eingangs genannten technischen Gebiet zugehörende Ventileinrichtung zum Entlüften von Druckgiessformen zu schaffen, welche einerseits hohe Entlüftungsleistungen ermöglicht dabei aber gleichzeitig einfach aufgebaut ist, zuverlässig arbeitet und sehr kurze Schliesszeiten ermöglicht.

Diese Aufgabe wird mit einer gemäss dem Anspruch 1 ausgebildeten Ventileinrichtung gelöst.

Indem die Ventileinrichtung zumindest zwei Entlüftungsventile und einen Kraftaufnehmer aufweist, der ohne separates Zwischenelement in direkter Wirkverbindung mit dem Ventilkolben des jeweiligen Entlüftungsventils (18, 24) steht, wird die grundsätzliche Voraussetzung geschaffen, dass hohe Entlüftungsleistungen bei gleichzeitig sehr kurzen Schliesszeiten und vergleichsweise geringem Kraftaufwand realisiert werden können, da auf kraftübertragende Elemente zwischen dem Kraftaufnehmer und dem jeweiligen Ventilkolben verzichtet werden kann. Damit kann gleichzeitig auch die Anzahl und die Masse der beweglichen und für den Schliessvorgang der beiden Entlüftungsventile notwendigen Elemente reduziert werden, was den weiteren Vorteil hat, dass der Aufbau der Ventileinrichtung vergleichsweise einfach ist und eine zuverlässige Arbeitsweise begünstigt wird.

Bevorzugte Weiterbildungen der Ventileinrichtung sind in den abhängigen Ansprüchen 2 bis 16 umschrieben.

So ist bei einer bevorzugten Weiterbildung vorgesehen, dass der Kraftaufnehmer zentral zwischen den Ventilkolben angeordnet ist. Dies begünstigt einen kompakten Aufbau der Ventileinrichtung und ermöglicht einen symmetrischen Aufbau der beweglichen Teile.

Eine besonders bevorzugte Weiterbildung der Ventileinrichtung sieht vor, dass diese zwei Entlüftungsventile aufweist, deren beide Ventilkolben in einer Ebene mit dem Kraftaufnehmer angeordnet sind. Dadurch wird ein kompakter Aufbau der Ventileinrichtung besonders begünstigt, zumal die beiden Ventilkolben bei dieser Ausbildung nahe an dem Kraftaufnehmer angeordnet und die kraftübertragenden Teile einfach gestaltet werden können.

Vorzugsweise ist der Kraftaufnehmer mit radialen Fortsätzen versehen, welche in eine Ausnehmung des jeweiligen Ventilkolbens eingreifen oder den jeweiligen Ventilkolben durchsetzen. Diese Ausbildung begünstigt einen einfachen und leichten Aufbau und ermöglicht besonders kurze Schliesszeiten.

Eine weitere, besonders bevorzugte Weiterbildung sieht vor, dass der Kraftaufnehmer mitsamt den radialen Fortsätzen einstückig ausgebildet ist. Diese Ausbildung hilft ebenfalls, die Masse der beweglichen und für den Schliessvorgang der beiden Entlüftungsventile notwendigen Elemente weiter zu reduzieren und den Aufbau der Ventileinrichtung einfach zu gestalten.

Bei einer weiteren bevorzugten Weiterbildung der Ventileinrichtung ist der Kraftaufnehmer zwischen einer vorgeschobenen Ausgangsstellung und einer zurückgeschobenen Wirkstellung axial verschiebbar, wobei der Kraftaufnehmer in der Ausgangsstellung die Ventilkolben in einer vorgeschobenen Offenstellung zu halten bestrebt ist, während er in der Wirkstellung die Ventilkolben in einer zurückgeschobenen Schliessstellung zu halten bestrebt ist, und wobei der Kraftaufnehmer mittels zumindest einer Feder in Richtung seiner Ausgangsstellung belastet ist, und wobei der Kraftaufnehmer mit einer Druckfläche versehen ist und die Ventileinrichtung mit einem den Kraftaufnehmer zumindest teilweise umgebenden Druckraum versehen ist, der pneumatisch beaufschlagbar ist, um auf die Druckfläche des Kraftaufnehmers eine gegen die Federkraft gerichtete Kraft auszuüben und den Kraftaufnehmer in seine Wirkstellung zu verschieben und/oder in der Wirkstellung zu halten. Diese Ausbildung ermöglicht eine direkte pneumatische Beaufschlagung des Kraftaufnehmers, ohne dass dazu separate Elemente wie bei den aus dem Stand der Technik bekannten Ventileinrichtungen notwendig wären.

Besonders bevorzugt weist der Kraftaufnehmer einen zylindrischen Grundkörper und einen zylindrischen Kopfteil auf, wobei der Kopfteil einen kleineren Durchmesser als der Grundkörper besitzt und die Stirnfläche des Kopfteils in den Entlüftungskanal ragt. Dadurch kann sowohl der Grundkörper wie auch der Kopfteil besonders gut an die jeweiligen Bedürfnisse angepasst werden. Aufgrund des geringen Gewichts der für den Schliessvorgang zu bewegenden Elemente kann die Stirnfläche des von dem flüssigen Giessmaterial zu beaufschlagenden Kopfteils vergleichsweise klein gehalten werden, während der Grundkörper entsprechend grösser und robuster gestaltet werden kann und sich besonders eignet, um daran die radialen Fortsätze anzuordnen.

Vorzugsweise ist die genannte Druckfläche am Übergang von dem zylindrischen Grundkörper zu dem zylindrischen Kopfteil am Kraftaufnehmer ausgebildet. Dies ist eine besonders elegante und einfache Lösung zur Realisierung einer Druckfläche zum pneumatischen Beaufschlagen des Kraftaufnehmers.

Bei einer weiteren bevorzugten Weiterbildung weist die Ventileinrichtung eine in das Ventilgehäuse integrierte Auslasskammer auf, in welche der bzw. die Entlüftungskanäle münden, wobei die Auslasskammer mit einem nach aussen führenden Flansch verbunden ist. Diese Ausbildung ermöglicht es, die Ventileinrichtung schnell und einfach mit einer Absaugvorrichtung zu verbinden.

Vorzugsweise ist die Ventileinrichtung mit einer federbelasteten Druckplatte versehen, welche mit einer Vielzahl von Druckstangen in Wirkverbindung steht, wobei die Druckstangen im Ausgangszustand über die Frontfläche des Gehäuses vorstehen, und wobei die Druckstangen beim Fixieren einer Verschlussplatte an der Frontfläche des Gehäuses die Druckplatte entgegen der Kraft der Druckfedern nach hinten schieben und wobei die Druckplatte beim Entfernen der Verschlussplatte den Kraftaufnehmer zusammen mit den Ventilkolben nach vorne in die Ausgangsstellung schieben. Eine solche Ausbildung erlaubt, die verschiebbaren Elemente, namentlich den

Kraftaufnehmer zusammen mit den Ventilkolben zu nutzen, um die erstarrte Giessmasse aus dem Entlüftungskanal auszustossen.

Besonders bevorzugt legt der Kraftaufnehmer einen axialen Hub zwischen 1 und 7 Millimetern, insbesondere zwischen 3 und 5 Millimetern zurück, um von der Ausgangsstellung und die Wirkstellung zu gelangen. Durch diesen vergleichsweise kleinen Hub wird die von der flüssigen Giessmasse auf den Kraftaufnehmer übertragene kinetische Energie auf einem tiefen Niveau gehalten.

Die Stirnseite des in den Entlüftungskanal mündenden Kopfteils des Kraftaufnehmers weist bevorzugt einen Durchmesser zwischen 5 und 25 Millimetern auf. Dieser vergleichsweise kleine Durchmesser bzw. die entsprechende Fläche trägt zusätzlich oder ergänzend dazu bei, dass die von der flüssigen Giessmasse auf den Kraftaufnehmer übertragene kinetische Energie vergleichsweise klein gehalten werden kann.

Bei einer weiteren, bevorzugten Weiterbildung der Ventileinrichtung weist der Entlüftungskanal einen Einlasskanal auf, der sich zu einer der Anzahl der Entlüftungsventile entsprechenden Anzahl von Ästen verzweigt, wobei der Kraftaufnehmer im Bereich der Abzweigung angeordnet ist und wobei im Bereich des Endes des jeweiligen Asts ein Entlüftungsventil angeordnet ist. Durch diese Ausbildung wird einerseits eine gute und schnelle Übertragung der kinetischen Energie von der flüssigen Giessmasse auf den Kraftaufnehmer erreicht und das jeweilige Entlüftungsventil kann strömungstechnisch entsprechend weit entfernt von dem Kraftaufnehmer angeordnet werden.

Vorzugsweise ist der jeweilige Ast des Entlüftungskanals mit zumindest zwei, insbesondere zumindest drei Umlenkungen versehen ist, wobei zumindest zwei Umlenkungen eine Richtungsänderung des eindringenden Giessmaterials um zumindest 60° bewirken. Diese Ausbildung hilft, die Geschwindigkeit des Giessmaterials vor dem Auftreffen auf den jeweiligen Ventilkolben zu verlangsamen.

Eine weitere bevorzugte Weiterbildung sieht vor, dass der jeweilige Ast des Entlüftungskanals mit zumindest einer, in der Art einer Sackgasse ausgebildeten Materialauffangkammer für das vordringende Giessmaterial versehen ist. Diese Ausbildung hilft, die Geschwindigkeit des Giessmaterials zu verlangsamen, damit nach dem Auftreffen des Giessmaterials auf den Kraftaufnehmer genügend Zeit zum Schliessen der beiden Ventilkolben verbleibt, so dass das Giessmaterial erst dann bis zu dem jeweiligen Ventilkolben vorgedrungen ist, wenn sich dieser bereits in der zurückgeschobenen Schliessstellung befindet.

Schliesslich ist bei einer weiteren, bevorzugten Weiterbildung vorgesehen, dass in das Ventilgehäuse eine Blockhülse eingesetzt ist, welche aus einem härteren Material als das Ventilgehäuse gefertigt ist und zur Aufnahme und Führung des Kraftaufnehmers sowie der Ventilkolben ausgebildet ist. Eine solche Blockhülse kann spezifisch an die Anforderungen insbesondere in Bezug auf Wärmeausdehnung und Verschleiss angepasst und ggf. einfach und schnell ausgetauscht werden.

Nachfolgend wird die Erfindung anhand von Zeichnungen näher erläutert. Dabei zeigt:
- Fig. 1: eine Frontansicht der Ventileinrichtung;
- Fig. 2: einen ersten Schnitt durch die Ventileinrichtung entlang der Linie A-A in Fig. 1;
- Fig. 3: einen zweiten Schnitt durch die Ventileinrichtung entlang der Linie B-B in Fig. 1;
- Fig. 4: einen dritten Schnitt durch die Ventileinrichtung entlang der Linie C-C in Fig. 1;
- Fig. 5: einen vierten Schnitt durch die Ventileinrichtung entlang der Linie D-D in Fig. 1;
- Fig. 6: einen fünften Schnitt durch die Ventileinrichtung entlang der Linie E-E in Fig. 2;
- Fig. 7: einen Schnitt durch die Ventileinrichtung zusammen mit einer Verschlussplatte mit geöffneten Entlüftungsventilen während des Entlüftungsvorgangs;
- Fig. 8: einen Schnitt durch die Ventileinrichtung zusammen mit der Verschlussplatte nach dem Schliessen der beiden Entlüftungsventile;

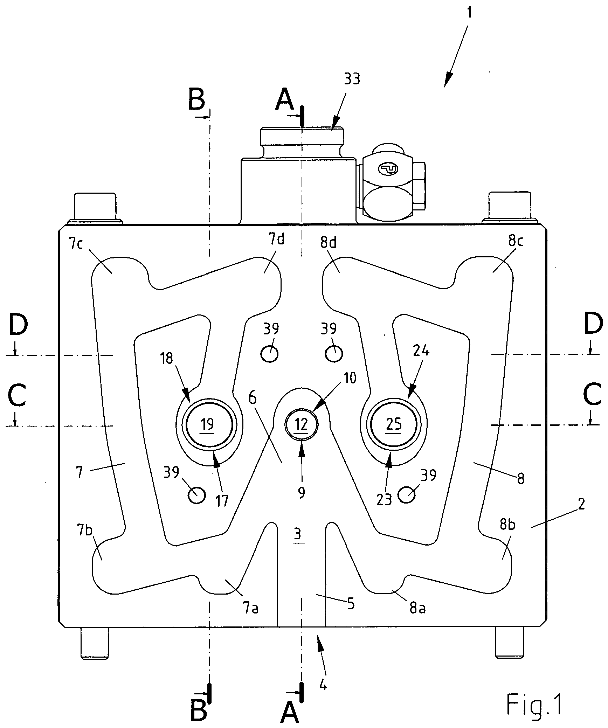

Die Figur 1 zeigt die Ventileinrichtung in einer Ansicht von vorne auf deren Frontfläche. Da das grundlegende Prinzip einer derartigen Ventileinrichtung aus der EP 0 612 573 A1 bekannt ist, wird nachfolgend insbesondere nur auf deren wesentliche Elemente und/oder erfindungsgemäss gestaltete Teile eingegangen.

Die Ventileinrichtung 1 umfasst ein Ventilgehäuse 2, in das ein gesamthaft mit 3 bezeichneter Entlüftungskanal eingelassen ist. Der Entlüftungskanal 3 umfasst einen auf der Unterseite in das Ventilgehäuse 2 mündenden Einlass 4 in der Form eines Einlasskanals 5, zwei Teilkanäle in der Form von zwei Ästen 7, 8 sowie einen Auslass in der Form eines nach oben aus dem Ventilgehäuse 2 führenden Auslasskanals (nicht erkennbar). Zudem umfasst der Entlüftungskanal noch weitere, innerhalb des Gehäuses 2 verlaufende Kanäle, auf die nachfolgend noch eingegangen wird.

Der vertikal von unten in das Gehäuse 2 führende Einlasskanal 5 verzweigt sich in der unteren Hälfte des Ventilgehäuses 2 in die beiden Äste 7, 8. Im Bereich der Abzweigung 6 des Entlüftungskanals 3 ist ein Betätigungsorgan in der Form eines giessmaterialbetätigten Kraftaufnehmers 10 angeordnet. Jeder der genannten Äste 7, 8 des Entlüftungskanals 3 besteht aus einer Vielzahl von Teilkanälen, wobei im Bereich des Endes jedes Astes 7, 8 ein Entlüftungsventil 18, 24 angeordnet ist. Jedes Entlüftungsventil 18, 24 ist mit einem Ventilkolben 19, 25 versehen, der zwischen einer vorgeschobenen Offen- und einer zurückgezogenen Schliessstellung axial beweglich ist. Aus der Fig. 1 ist die Stirnseite des Kopfteils 12 des Kraftaufnehmers 10 ersichtlich, der von dem in den Entlüftungskanal 3 eindringenden Giessmaterial beaufschlagbar ist. Der Kraftaufnehmer 10 ist axial zwischen einer vorgeschobenen Ausgangsstellung und einer zurückgeschobenen Wirkstellung verschiebbar. Der Kraftaufnehmer 10 ist zentral zwischen den beiden Entlüftungsventilen 18, 24 angeordnet und kraftschlüssig mit den beiden Ventilkolben 19, 25 gekoppelt, wie anschliessend noch näher erläutert wird. Von dem jeweiligen Entlüftungsventil 18, 24 führt je ein Kanal vertikal nach oben in eine gemeinsame in das Gehäuse 2 eingelassenen Auslasskammer. Von der genannten Auslasskammer führt der in einen Flansch 33 mündende Auslasskanal aus dem Ventilgehäuse 2 nach aussen. Sowohl die vertikal nach oben führenden Kanäle wie auch die Auslasskammer sind aus der Darstellung gemäss Fig. 1 nicht ersichtlich. Zudem sind andeutungsweise vier Druckstangen in der Form von Stösseln 39 erkennbar, deren Funktion anschliessend noch näher erläutert wird.

Im Bereich des Kraftaufnehmers 10 sowie der beiden Entlüftungsventile 18, 24 ist am Boden des Entlüftungskanals 3 bzw. des jeweiligen Asts 7, 8 je eine runde Öffnung 9, 17, 23 angeordnet. Die Grösse dieser Öffnung 9, 17, 23 ist auf das dahinter liegende Element -Kraftaufnehmer 10 bzw. Ventilkolben 19, 25- abgestimmt. Der Durchmesser der für den Kraftaufnehmer 10 vorgesehenen Öffnung 9 ist geringfügig grösser als der Durchmesser des Kopfteils 12 des Kraftaufnehmers 10, während der Durchmesser der für die Entlüftungsventile 18, 24 vorgesehenen Öffnungen 17, 23 jeweils geringfügig grösser ist als der Durchmesser der beiden Ventilkolben 19, 25. Der Durchmesser des Kopfteils 12 des Kraftaufnehmers 10 weist vorzugsweise einen Durchmesser zwischen 5 und 25 Millimetern auf. Die von dem Giessmaterial beaufschlagbare Fläche des Kraftaufnehmers 10 beträgt damit ca. 19,6 bis 490 mm². Besonders bevorzugt liegt die beaufschlagbare Fläche des Kraftaufnehmers 10 zwischen ca. 50 und 200 mm².

Anhand des Verlaufs des Entlüftungskanals 3 ist erkennbar, dass das flüssige Giessmaterial nach dem Auftreffen auf den Kraftaufnehmer 10 bzw. dessen Kopfteil 12 in dem jeweiligen Ast 7, 8 insgesamt vier bis fünf mal umgelenkt wird, bevor es zu dem jeweiligen Entlüftungsventil 18, 24 vorgedrungen ist. Direkt nach dem Auftreffen auf den Kraftaufnehmer 10 wird das flüssige Giessmaterial zum ersten Mal in den jeweiligen Ast 7, 8 umgelenkt. Im vorliegenden Beispiel wird das flüssige Giessmaterial nach dem Auftreffen auf den Kraftaufnehmer 10 um ca. 140°-160° umgelenkt, wodurch eine gute Übertragung der kinetischen Energie von der flüssigen Giessmasse auf den Kraftaufnehmer 10 erreicht und gleichzeitig das Vordringen des Giessmaterials verzögert wird. Von den weiteren Umlenkungen bewirken deren drei eine Umlenkung, d.h. eine Richtungsänderung des eindringenden Giessmaterials um zumindest 60°, zwei davon um zumindest 90°, wobei die erste Umlenkung im jeweiligen Ast 7, 8 eine Richtungsänderung des eindringenden Giessmaterials um ca. 50° bewirkt. Zudem sind in jedem Ast 7, 8 vier in der Art einer Sackgasse angeordnete Materialauffangkammern 7a-7d; 8a-8d vorgesehen, welche ein gewisses Volumen an flüssiger Giessmasse aufnehmen und das Vordringen des Giessmaterials verzögern helfen. Jedenfalls wird durch die Ausbildung des Entlüftungskanals 3 nach dem Kraftaufnehmer 10 erreicht, dass das mit einer Geschwindigkeit von ca. 100-150m/s in den Einlass 4 eintretende flüssige Giessmaterial ca. 3 bis 5 Millisekunden benötigt, bis es von dem Kraftaufnehmer 10 zu dem jeweiligen Entlüftungsventil 18, 24 vorgedrungen ist. Demgegenüber ist der Schliessmechanismus derart dimensioniert, dass dieser ca. 0,5 bis 1,5 Millisekunden benötigt, bis nach dem Auftreffen des Giessmaterials auf die Stirnfläche des Kopfteils 12 des Kraftaufnehmers 10 die beiden Ventilkolben 19, 25 nach hinten in die Schliessstellung verschoben sind. Es versteht sich, dass vorgängige Angaben nur als Richtwerte zu verstehen sind und aufgrund einer Vielzahl von Parametern variieren können. Diesbezüglich zu erwähnen sind beispielsweise die Geschwindigkeit des eindringenden Giessmaterials, das spezifische Gewicht des Giessmaterials, die Länge, der Querschnitt, die Art und Ausbildung des gesamten Entlüftungskanals inkl. seiner Äste wie auch die Masse der für den Schliessvorgang zu bewegenden Elemente, der Schliessweg des Kraftaufnehmers und der Ventilkolben schliesslich aber auch die Fläche des mit Giessmaterial beaufschlagbaren Kopfteils des Kraftaufnehmers. Trotzdem weist der Entlüftungskanal 3 einen durchgehend grossen Querschnitt auf, um pro Zeiteinheit genügend Gasvolumen durchleiten bzw. ableiten zu können. Bei kleineren Ventileinrichtungen kann es durachsu auch genügen, wenn das Giessmaterial nur zwei- oder dreimal umgelenkt wird und/oder wenn nur eine oder zwei Materialauffangkammern vorgesehen werden.

Da insbesondere das spezifische Gewicht des Giessmaterials wie auch dessen Eintrittsgeschwindigkeit je nach Anwendung variieren können, können insbesondere diese beiden Parameter auch die Schliesszeit beeinflussen. Diesem Umstand kann beispielsweise durch Verändern der mit Giessmaterial beaufschlagten Stirnfläche des Kopfteils 12 des Kraftaufnehmers 10 Rechnung getragen werden. Als Giessmaterialien seien beispielsweise Aluminium, Magnesium, Zink und Messing erwähnt.

Die Schnittlinie A-A bzw. Schnittebene A-A der Ventileinrichtung 1 bildet gleichzeitig die Symmetrielinie bzw. die Symmetrieebene. In Bezug auf eine durch die Schnittlinie A-A gelegte Ebene ist die Ventileinrichtung 1 symmetrisch aufgebaut.

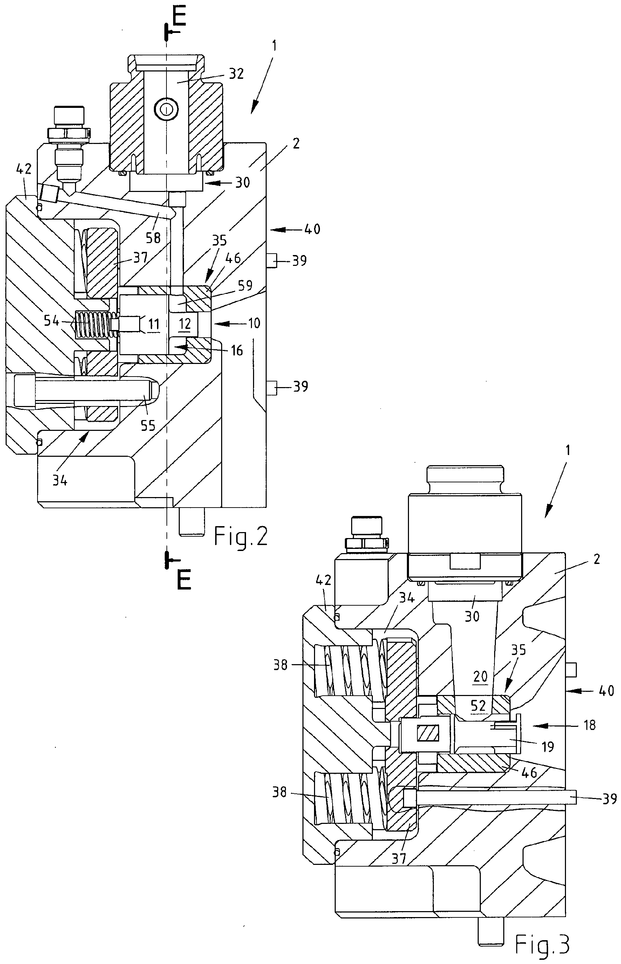

Die Fig. 2 zeigt einen Schnitt durch die Ventileinrichtung 1 entlang der Linie A-A in Fig. 1, wobei der Kraftaufnehmer 10 nicht geschnitten dargestellt ist. Die Ventileinrichtung befindet sich hier in der Ausgangsstellung, in der die beiden Entlüftungsventile (nicht ersichtlich) geöffnet sind. Aus dieser Darstellung ist erkennbar, dass das Ventilgehäuse 2 zwei Ausnehmungen 34, 35 aufweist. Die vordere, zur Frontfläche 40 des Ventilgehäuses 2 hin gerichtete Ausnehmung 35 dient der Aufnahme einer Blockhülse 46. Die hintere, der Rückseite des Ventilgehäuses 2 zugewandte Ausnehmung 34 dient insbesondere der Aufnahme einer Druckplatte 37, welche mittels mehreren Druckfedern in Richtung der Frontfläche 40 des Gehäuses 2 belastet ist. Die hintere Ausnehmung 34 ist mittels einer Abdeckplatte 42 rückseitig verschlossen. Die Abdeckplatte 42 ist mittels Schrauben mit dem Gehäuse 2 verbunden. Von den insgesamt vier Schrauben ist aus der vorliegenden Darstellung nur eine Schraube 55 erkennbar.

Der Kraftaufnehmer 10 besitzt einen im Wesentlichen zylindrischen Grundkörper 11 und einen im Wesentlichen zylindrischen Kopfteil 12, wobei der Kopfteil 12 gegenüber dem Grundkörper 11 einen kleineren Durchmesser aufweist. Durch die Abstufung zwischen dem Grundkörper 11 und dem Kopfteil 12 wird eine ringförmige Fläche 16 gebildet. Auf seiner Rückseite ist der Kraftaufnehmer 10 mit einer Ausnehmung versehen, in der eine an der Abdeckplatte 42 abgestützte Druckfeder 54 teilweise aufgenommen ist. Diese Druckfeder 54 belastet den Kraftaufnehmer 10 in Richtung seiner vorgeschobenen Ausgangsstellung, in der die beiden Entlüftungsventile geöffnet sind. Die Druckplatte 37 ist mit einer aus dieser Darstellung nicht ersichtlichen, der Kontur des Kraftaufnehmers 10 angepassten Ausnehmung versehen, an deren Boden sich der Grundkörper 11 des Kraftaufnehmers 10 mit seiner Rückseite kraftschlüssig abstützen kann. Schliesslich ist noch eine in das Ventilgehäuse 2 integrierte Auslasskammer 30 erkennbar, welche mit einem nach aussen mündenden Flansch 33 verbunden ist. Die Innenseite des Flansches 33 ist mit einer Auslassbohrung 32 versehen, die mit der Auslasskammer 30 in Verbindung steht. Zudem sind zwei über die Frontfläche 40 vorstehende Stössel 39 erkennbar, deren Funktion anschliessend noch näher erläutert wird.

Von der Oberseite her führt ein Kanal 58 in das Gehäuse 2. Dieser Kanal 58 mündet über eine radiale Bohrung in einen zentralen Innenraum der Blockhülse 46, welcher der Aufnahme des Kraftaufnehmers 10 dient. In der Blockhülse 46 wird zwischen der ringförmigen Fläche 16 des Kraftaufnehmers 10 und dem vorderseitigen Ende des Innenraums der Blockhülse 46 ein Druckraum 59 gebildet, der über den genannten Kanal 58 mit Druckluft beaufschlagt werden kann. Sofern sich die Druckplatte 37 in ihrer zurückgeschobenen Stellung befindet, kann durch eine Druckbeaufschlagung des Druckraums 59 der Kraftaufnehmer 10 aus der hier gezeigten vorgeschobenen Ausgangstellung in seine zurückgeschobene Wirkstellung bewegt werden, in der die beiden Entlüftungsventile geschlossen sind.

Durch eine Druckbeaufschlagung des Druckraums 59 kann der Kraftaufnehmer 10 somit entgegen der Kraft der Druckfeder 54 nach hinten in Richtung der Abdeckplatte 42 in seine Wirkstellung verschoben und/oder in der Wirkstellung gehalten werden. in der Wirkstellung hält der Kraftaufnehmer 10 die beiden Ventilkolben 19, 25 in einer zurückgeschobenen Schliessstellung.

Die Blockhülse 46 ist aus einem temperaturbeständigen und verschleissfesten Material gefertigt, welches härter ist als das Ventilgehäuse 2. Die Blockhülse 46 ist austauschbar gestaltet, wobei als Material für die Blockhülse 46 beispielsweise ein Kaltarbeitsstahl in Frage kommt.

Die Fig. 3 zeigt einen Schnitt durch die Ventileinrichtung 1 entlang der Linie B-B in Fig. 1, wobei der Ventilkolben 19 nicht geschnitten dargestellt ist. In dieser Darstellung sind u.a. zwei von insgesamt vier Druckfedern 38 erkennbar, mittels welchen die Druckplatte 37 in Richtung der Frontfläche 40 belastet ist. Die Druckplatte 37 legt sich unter der Kraft der Federn 38 am Boden der hinteren Ausnehmung 34 im Gehäuse 2 an. Im unteren Bereich des Gehäuses 2 ist der Schnitt so gelegt, dass die eine von insgesamt vier stabförmigen, über die Frontfläche 40 des Gehäuses 2 vorstehenden Druckstangen 39 ersichtlich ist. Sämtliche vier Druckstangen 39 sind kraftschlüssig mit der Druckplatte 37 verbunden. Beim Fixieren einer aus dieser Darstellung nicht ersichtlichen Verschlussplatte an der Frontfläche 40 des Gehäuses 2 verschiebt die Verschlussplatte die vier Druckstangen zusammen mit der Druckplatte 37 entgegen der Kraft der Druckfedern 38 nach hinten in Richtung der hinteren Abdeckplatte 42. Dadurch hebt sich die Druckplatte 37 von der Rückseite des Kraftaufnehmers ab, so dass dieser unter der Krafteinwirkung des Giessmaterials um einige Millimeter nach hinten in die Wirkstellung geschoben werden kann, wie dies nachfolgend noch erläutert wird.

Des weiteren ist erkennbar, dass die Blockhülse 46 im Bereich des Entlüftungsventils 18 mit einer vertikal nach oben führenden Bohrung 52 versehen ist, welche in einen vertikal nach oben führenden Kanal 20 mündet. Die Bohrung 52 zusammen mit dem Kanal 20 bilden einen weiteren Teil des Entlüftungskanals und führen in die gemeinsame Auslasskammer 30. Die Blockhülse 46 kommt mit ihrer zur Frontfläche 40 gerichteten Vorderseite dicht an dem Boden der vorderen Ausnehmung 35 zur Anlage. Dabei ist die Blockhülse 46 sowohl in der Höhe wie auch in der Breite grösser, als die am Boden des Entlüftungskanals 3, 7, 8 vorgesehenen Öffnungen 9, 17, 23 (Fig. 1) für den Kraftaufnehmer 10 und die beiden Ventilkolben 19, 25. Durch diese Ausbildung kann sichergestellt werden, dass kein Giessmaterial in den Spalt zwischen der Blockhülse 46 und der vorderen Ausnehmung 35 des Ventilgehäuses 2 eindringen kann. Dies ist insbesondere im Vergleich mit Ausführungen, bei denen einzelne Hülsen für der jeweilige Element -Kraftaufnehmer, Ventilkolben- vorgesehen sind, ein weiterer Vorteil. Da solche einzelnen Hülsen üblicherweise sehr dünnwandig ausgebildet sind, besteht die Gefahr, dass Giessmaterial in den ringförmigen Spalt zwischen der Hülse und dem Ventilgehäuse eindringen kann.

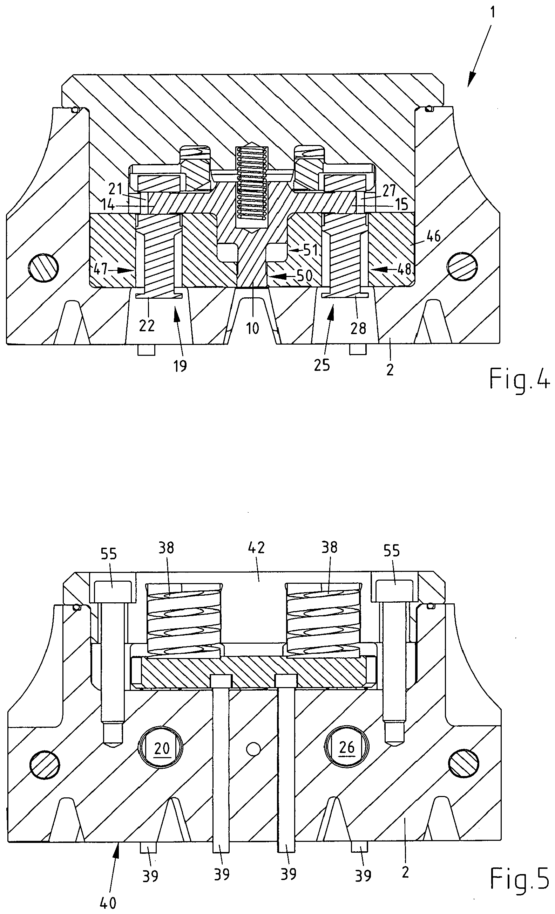

Die Fig. 4 zeigt einen Schnitt durch die Ventileinrichtung 1 entlang der Linie C-C in Fig. 1. Aus diesem mittig durch den Kraftaufnehmer 10 wie auch die beiden Ventilkolben 19, 25 der beiden Entlüftungsventile verlaufenden Schnitt ist erkennbar, dass an dem Grundkörper des Kraftaufnehmers 10 radiale Fortsätze 14, 15 ausgebildet sind. Unter dem Begriff radiale Fortsätze 14, 15 werden Fortsätze verstanden, welche sich in Bezug auf die Längsmittelachse des Kraftaufnehmers 10 bzw. dessen zylindrische Mantelfläche in radialer Richtung nach aussen erstrecken bzw. radial vorspringen. Vorzugsweise verlaufen diese radialen Fortsätze 14, 15 unter einem Winkel von zumindest annähernd 90° zur Längsmittelachse des Kraftaufnehmers 10. Der Kraftaufnehmer 10 mitsamt den radialen Fortsätzen 14, 15 ist einstückig ausgebildet und vorzugsweise aus gehärtetem Stahl gefertigt. Beide radialen Fortsätze 14, 15 greifen in je eine schlitzförmige Ausnehmung 21, 27 des jeweiligen Ventilkolbens 19, 25 ein und koppeln den Kraftaufnehmer 10 mechanisch direkt mit dem jeweiligen Ventilkolben 19, 25. Indem der Kraftaufnehmer 10 direkt mit den beiden Ventilkolben 19, 25 gekoppelt ist, müssen keine separaten Kupplungselemente vorgesehen werden. Der Kraftaufnehmer 10 steht somit ohne separates Zwischenelement in direkter Wirkverbindung mit dem Ventilkolben 19, 25 des jeweiligen Entlüftungsventils 18, 24. Obwohl im vorliegenden Beispiel die jeweilige Ausnehmung 21, 27 den Ventilkolben 19, 25 durchsetzt sind auch Ausführungen denkbar, bei denen die Ausnehmung nicht durchgehend ist. Aus dieser Darstellung ist insbesondere auch der symmetrische Aufbau der Ventileinrichtung 1 ersichtlich. Durch diese Ausbildung braucht keine Mitnehmerscheibe, wie sie bei den aus dem Stand der Technik bekannten Ventileinrichtungen bekannt ist, vorgesehen zu werden. Die sich durch diese Ausbildung ergebenden Vorteile werden anschliessend noch näher erläutert.

Zudem ist erkennbar, dass die Blockhülse 46 mit zwei zylindrischen Bohrungen 47, 48 zur Aufnahme und Führung der beiden Ventilkolben 19, 25 versehen ist. In der Mitte zwischen den beiden zylindrischen Bohrungen 47, 48 ist eine Ausnehmung zur Aufnahme des Kraftaufnehmers 10 in die Blockhülse 46 eingelassen. Diese mittige Ausnehmung umfasst zwei zylindrischen Bohrungen 50, 51, wobei die vordere Bohrung 50 der Aufnahme des Kopfteils des Kraftaufnehmers 10 dient, während die hintere Bohrung 51 der mehrheitlichen Aufnahme des Grundkörpers des Kraftaufnehmers 10 dient.

Die Fig. 5 zeigt einen Schnitt durch die Ventileinrichtung 1 entlang der Linie D-D in Fig. 1, wobei die beiden oberen Druckstangen 39 nicht geschnitten dargestellt sind. Von den vier Druckstangen 39 sind die beiden oberen vollständig erkennbar, während von den beiden unteren nur der über die Frontfläche 40 des Gehäuses 2 vorstehenden Teil erkennbar ist. Zudem sind zwei der vier Druckfedern 38 sowie zwei der vier die hintere Abdeckplatte 42 an dem Gehäuse 2 fixierenden Schrauben 55 erkennbar. Auch die beiden in das Gehäuse 2 eingelassenen Kanäle 20, 26, welche einen Teil des Entlüftungskanals bilden und nach oben in die Auslasskammer führen, sind ersichtlich.

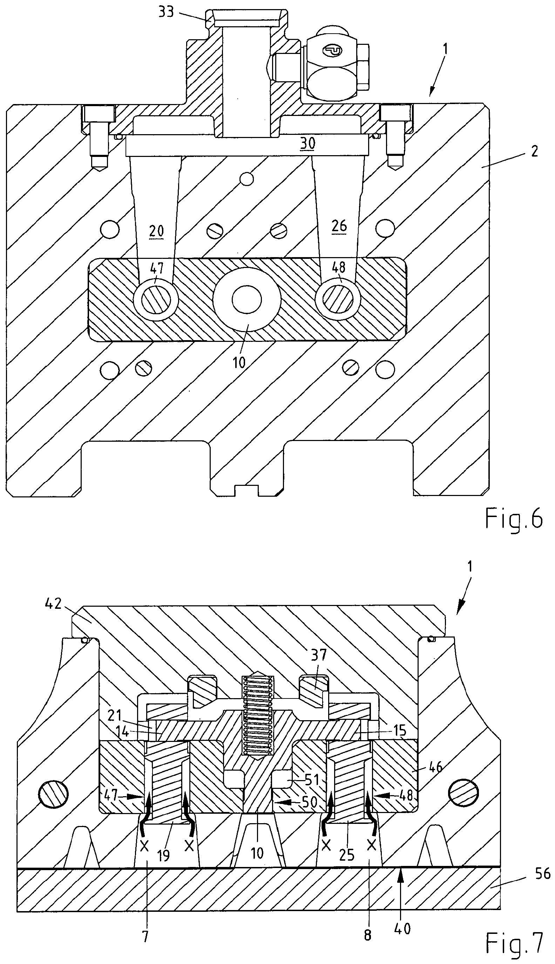

Die Fig. 6 zeigt einen Schnitt durch die Ventileinrichtung 1 entlang der Linie E-E in Fig. 2, wobei der Kraftaufnehmer 10 nicht geschnitten dargestellt ist. Von den für das jeweilige Entlüftungsventil vorgesehenen Bohrungen 47, 48 führt je ein Kanal 20, 26 nach oben in die gemeinsame Auslasskammer 30. Von oben ist der Flansch 33 in das Gehäuse 2 eingeschraubt, der mit der Absaugleitung einer Vakuumanlage (nicht dargestellt) verbunden werden kann. An den Flansch 33 kann ggf. zudem ein Filter (nicht dargestellt) angeschlossen werden.

Die Fig. 7 zeigt die Ventileinrichtung 1 in einem Schnitt entlang der Linie C-C in Fig. 1, wobei der Entlüftungskanal 3 mitsamt seinen Ästen 7, 8 mittels einer an der Frontfläche 40 des Gehäuses 2 angebrachten Verschlussplatte 56, auch Kompensator genannt, nach vorne abgeschlossen und abgedichtet ist. Die dem Fixieren der Verschlussplatte 56 dienenden Mittel sind nicht näher dargestellt. Durch das Fixieren der Verschlussplatte 56 werden die vier Druckstangen zusammen mit der Druckplatte 37 entgegen der Kraft der Druckfedern nach hinten in Richtung der hinteren Abdeckplatte 42 verschoben. Dadurch hebt sich die Druckplatte 37 von dem Kraftaufnehmer 10 ab, so dass dieser unter der Wirkung des in den Entlüftungskanals 3 eindringenden Giessmaterials nach hinten geschoben werden kann. Um den Formhohlraum einer Druckgiessform (beides nicht dargestellt) zu entlüften, wird der Einlass 4 bzw. der Einlasskanal 5 der Ventileinrichtung 1 mit dem zu entlüftenden Formhohlraum der Druckgiessform verbunden, während der Auslasskanal bzw. der Flansch an eine Absaugvorrichtung (nicht ersichtlich) angeschlossen wird. Solange sich die beiden Ventilkolben 19, 25 in der vorgeschobenen Offenstellung befinden, können Gase aus den beiden Ästen 7, 8 des Entlüftungskanals 3 an den beiden Ventilkolben 19, 25 vorbei in die gemeinsame Auslasskammer und von dort über den Auslass aus der Ventileinrichtung 1 nach aussen strömen. Die Strömungsrichtung der Gase ist mittels Pfeilen X angedeutet. Die Gase strömen von dem Einlasskanal über die beiden Äste 7, 8 des Entlüftungskanals und die geöffneten Ventilkolben 19, 25 in die Auslasskammer, wo sie über den Auslasskanal und den Flansch aus der Ventileinrichtung austreten können.

Sofern die Verschlussplatte 56 an dem Gehäuse angebracht ist, kann das Schliessen der Ventileinrichtung auch pneumatisch initiiert werden. Obwohl mit dem Anbringen der Verschlussplatte 56 die beiden Stössel 39 die Druckplatte 37 nach hinten verschieben, verharrt der Kraftaufnehmer 10 unter der Wirkung der Druckfeder 54 in seiner vorgeschobenen Ausgangsstellung. Nach dem Anbringen der Verschlussplatte 56 kann jedoch der Druckraum 59 in der Blockhülse 46 über den Luftkanal 58 (Fig. 2) mit Druckluft beaufschlagt werden, so dass der Kraftaufnehmer 10 zusammen mit den beiden Ventilkolben 19, 25 entgegen der Kraft der Druckfeder 54 nach hinten in die zurückgezogene Wirk- bzw. Schliessstellung bewegt wird. Ein pneumatisches Schliessen der Ventileinrichtung kann beispielsweise am Anfang eines Giesszyklus notwendig sein, da die Druckgussmaschine nicht mit hohem Druck das Giessmaterial in die Form einspritzt. Mittels Druckluft kann aber beispielsweise auch die Funktionsweise der Entlüftungsventile in Bezug auf ein korrektes Schliessen überprüft werden.

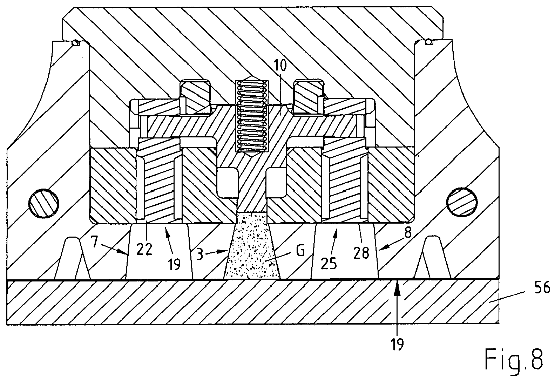

Die Fig. 8 zeigt die Ventileinrichtung in einer Darstellung gemäss Fig. 7, wobei das über den Entlüftungskanal 3 in die Ventileinrichtung bis zu dem Kopfteil des Kraftaufnehmers 10 vordringende Giessmaterial G schematisch dargestellt ist. Durch die kinetische Energie des sich mit hoher Geschwindigkeit fortbewegenden Giessmaterials G wird der Kraftaufnehmer 10 durch das auf die Stirnseite seines Kopfteils auftreffende Giessmaterial G schlagartig nach hinten in dargestellte Wirkstellung geschoben.

Durch die direkte Kopplung der beiden Ventilkolben 19, 25 mit dem Kraftaufnehmer 10, nimmt der Kraftaufnehmer 10 die beiden Ventilkolben 19, 25 bei seiner rückwärts gerichteten Bewegung mit. Indem der Kraftaufnehmer 10 in der Mitte zwischen den beiden Ventilkolben 19, 25 und zusammen mit diesen in einer horizontalen Ebene angeordnet ist, kann eine symmetrische Belastung des Kraftaufnehmers 10 erreicht werden, was in Bezug auf eine sichere Funktionsweise vorteilhaft ist. Gleichzeitig trägt diese Ausbildung dazu bei, dass die Masse bzw. das Gewicht des Kraftaufnehmers 10 vergleichwsweise egring gehalten werden kann, da nicht wie bei den nach dem St.d.T. ausgebildeten Vorrichtungen eine Mitnehmerplatte o. ä. vorgesehen werden muss, sondern lediglich zwei radialen Fortsätze 14, 15. Zudem wird durch die genannte Anordnung zusammen mit dem symmetrischen Aufbau der Ventileinrichtung 1 erreicht, dass der Weg des flüssigen Giessmaterials vom Kraftaufnehmer 12 zu dem jeweiligen Ventilkolben 19, 25 gleich lang ist.

Die Schliesselemente bestehend aus dem Kraftaufnehmer 10 und den beiden Ventilkolben 19, 25 sind derart dimensioniert und aufeinander abgestimmt, dass sich die beiden Ventilkolben 19, 25 in der zurückgeschobenen Schliessstellung befinden, bevor das Giessmaterial G bis zu dem jeweiligen Entlüftungsventil, namentlich dem Kopfteil 22, 28 des jeweiligen Ventilkolbens 19, 25 vorgedrungen ist. Dieser Umstand ist dadurch angedeutet, dass in dem jeweiligen Ast 7, 8, namentlich in dem Raum vor dem Ventilkolben 19, 25, noch kein Giessmaterial vorhanden bzw. eingezeichnet ist. Um von der Ausgangsstellung und die Wirkstellung zu gelangen, legt der Kraftaufnehmer 10 einen axialen Hub zwischen 1 und 7 mm, vorzugsweise zwischen 3 und 5 mm zurück.

Die Form und Ausbildung des Entlüftungskanals 3 mit seinen beiden Ästen 7, 8 ist derart auf den Kraftaufnehmer 10 und die beiden Ventilkolben 19, 25 abgestimmt, dass die beiden Ventilkolben 19, 25 nach hinten in die Schliessstellung geschoben sind, bevor das Giessmaterial bis zu den Ventilkolben 19, 25 vorgedrungen ist. Diesbezügliche Versuche und Simulationen mit einer erfindungsgemäss gestalteten Ventileinrichtung haben ergeben, dass ein durchschnittlicher Schliessvorgang ca. 1 Millisekunde dauert, gemessen von dem Zeitpunkt des Auftreffens des Giessmaterials auf den Kraftaufnehmer 10 bis zum Schliessen der beiden Ventilkolben 19, 25. Demgegenüber braucht das Giessmaterial ca. 4 Millisekunden, bis es von dem Kraftaufnehmer 10 bis zu den beiden Ventilkolben 19, 25 vorgedrungen ist. Jedenfalls sind die Elemente bestehend aus Kraftaufnehmer 10, Ventilkolben 19, 25 und Entlüftungskanal 3 bzw. den Ästen 7, 8 derart dimensioniert und aufeinander abgestimmt, dass sich die beiden Ventilkolben 19, 25 in der zurückgeschobenen Schliessstellung befinden, bevor das Giessmaterial bis zu ihnen vorgedrungen ist. Durch die vergleichsweise geringe zu bewegende Masse -Kraftaufnehmer-Ventilkolben- ist der Schliessvorgang nicht mehr so zeitkritisch, wie bei vergleichbaren Ventileinrichtungen. Bei vergleichbaren Ventileinrichtungen muss eine ca. 2- bis 4-mal grössere Masse für einen Schliessvorgang bewegt werden.

Am Ende eines Giessvorgangs wird die Verschlussplatte 56 von der Frontfläche 40 entfernt. Dabei werden die Stössel 39 (Fig. 5) freigegeben, wodurch sich das aus den vier Druckfedern 38 bestehende Federpaket entspannen kann. Das Federpaket drückt dann die bewegliche Druckplatte 37 (Fig. 3) zusammen mit dem Kraftaufnehmer 10, den beiden Ventilkolben 19, 25 und den vier Druckstangen nach vorne in Richtung der Frontfläche 40. Der Kraftaufnehmer 10 zusammen mit den beiden Ventilkolben 19, 25 drückt dabei auf die in dem Entlüftungskanal 3 und seinen Ästen 7, 8 erstarrte Giessmasse -Steiger- und stösst diese nach vorne aus dem Ventilgehäuse 2 aus. Das Federpaket dient damit der Rückführung des Kraftaufnehmers 10 zusammen mit den beiden Ventilkolben 19, 25 in die Ausgangs- bzw. Offenstellung wie auch dem Ausstossen der erstarrten Giessmasse.

Zusammenfassend lässt sich festhalten, dass eine derart ausgebildete Ventileinrichtung durch das Vorsehen von zwei Entlüftungsventilen einerseits hohe Entlüftungsleistungen ermöglicht. Andererseits kann durch die direkte Kopplung des giessmaterialbetätigten Kraftaufnehmers mit dem Ventilkolben des jeweiligen Entlüftungsventils auf kraftübertragende Elemente zwischen dem Kraftaufnehmer und dem jeweiligen Ventilkolben verzichtet werden. Dadurch kann die Anzahl der für den Schliessvorgang der Entlüftungsventile benötigten Elemente auf ein Minimum reduziert werden. So braucht beispielsweise keine Mitnehmerscheibe vorgesehen zu werden. Zudem kann das Gewicht der zum Schliessen der Ventilkolben notwendigen Teile erheblich reduziert werden, was ein schnelleres Schliessen der Entlüftungsventile und/oder einen geringeren Energieaufwand für den Schliessvorgang ermöglicht. Im vorliegenden Beispiel müssen für den Schliessvorgang der beiden Entlüftungsventile insgesamt nur 3 Elemente bewegt werden, namentlich der Kraftaufnehmer 10 und die beiden Ventilkolben 19, 25. Ggf. kann auch die Stirnfläche des mit Giessmaterial beaufschlagten Kopfteils des Kraftaufnehmers verkleinert werden. Zudem kann auch der Schliessweg des Kraftaufnehmers wie auch der Ventilkolben reduziert werden. Schliesslich kann auch das Gesamtgewicht der Ventileinrichtung und ggf. dessen Grösse reduziert werden. Jedenfalls ist die Ventileinrichtung sehr einfach aufgebaut und begünstigt eine langzeitstabile und zuverlässige Arbeitsweise. Durch den im Wesentlichen symmetrischen Aufbau ist zudem die Gefahr des Verklemmens oder einseitigen Abnutzens der beweglichen Teile reduziert. Gegenüber bekannten und vergleichbaren Ventileinrichtungen kann auch die Gesamtzahl an Komponenten wie auch die Grösse und das Gesamtgewicht reduziert werden.

Es versteht sich, dass das vorgängige Ausführungsbeispiel keineswegs als abschliessend zu betrachten ist, sondern dass im Rahmen des in den Ansprüchen definierten Schutzumfangs durchaus davon abweichende Ausführungen möglich sind. So können anstelle von zwei Entlüftungsventilen beispielsweise auch drei oder vier Entlüftungsventile vorgesehen werden. Vorzugsweise ist der Kraftaufnehmer auch bei einer solchen Ausbildung zentral zwischen den Entlüftungsventilen angeordnet, wobei die Entlüftungsventile vorzugsweise auf einer Kreisfläche verteilt angeordnet werden. Anstelle von zwei radialen Fortsätzen könnte der Kraftaufnehmer auch mit einem ringförmig bzw. kragenförmig umlaufenden Vorsprung versehen werden, der mit den Ventilkolben gekoppelt ist. Eine weitere Variante besteht darin, dass ein Filter in die Ventileinrichtung integriert wird. Beispielsweise könnte ein Filter in die Auslasskammer integriert werden.

Wenn vorgängig von giessmaterialbetätigtem Kraftaufnehmer gesprochen wird, so ist darunter nicht zwingend ein vom Giessmaterial direkt betätigter Kraftaufnehmer zu verstehen, sondern es sind auch Ausführungsformen denkbar, bei denen der Kraftaufnehmer vom Giessmaterial indirekt betätigt wird. Dazu könnte dem Kraftaufnehmer ein Element vorgeschaltet werden, welches direkt mit dem Giessmaterial in Berührung kommt und die zum Schliessen der Ventilkolben benötigte Kraft vom Giessmaterial auf den Kraftaufnehmer überträgt. Eine solche Ausführung könnte dann Sinn machen, wenn das mit dem Giessmaterial in Berührung kommende Element beispielsweise nur einen Bruchteil des Schliesswegs des Kraftaufnehmers zurücklegen soll, um die übertragene kinetische Energie zu reduzieren.

Die wesentlichen Vorteile der gezeigten Ventileinrichtung lassen sich wie folgt zusammenfassen:
- Durch die direkte Kopplung des Kraftaufnehmers mit dem Ventilkolben des jeweiligen Entlüftungsventils kann die Masse der für den Schliessvorgang zu bewegenden Teile reduziert werden;
- Durch das Vorsehen von zumindest 2 Entlüftungsventilen werden hohe Entlüftungsleistungen ermöglicht;
- Es können sehr kurze Schliesszeiten realisiert werden;
- Es können sehr kurze Schliesswege realisiert werden
- Der Aufbau der Ventileinrichtung ist vergleichsweise einfach;
- Beim Vorsehen von 2 Entlüftungsventilen müssen nur 3 Elemente für den Schliessvorgang bewegt werden;
- Es wird eine zuverlässige Arbeitsweise ermöglicht;
- Das Gewicht der Ventileinrichtung ist vergleichsweise gering;
- Die von der flüssigen Giessmasse auf den Kraftaufnehmer übertragene Energie kann vergleichsweise gering gehalten werden;
- Durch das Vorsehen einer Blockhülse der genannten Art können die hoch beanspruchten Stellen innerhalb der Ventileinrichtung der Beanspruchung entsprechend optimiert d.h. angepasst werden;
- Die Blockhülse kann schnell, einfach und kostengünstig ersetzt werden;
- Die Ventileinrichtung ermöglicht ein sicheres und zuverlässiges Entlüften bis zum vollständigen Füllen des Formhohlraums;

## Patentansprüche

1. Ventileinrichtung (1) zum Entlüften von Druckgiessformen, mit zumindest einem Ventilgehäuse (2) und einem zwischen einem Einlass (4) und einem Auslass (32) verlaufenden Entlüftungskanal (3), wobei in dem zumindest einen Entlüftungskanal (3) zumindest ein giessmaterialbetätigter Kraftaufnehmer (10) und zumindest zwei damit in Wirkverbindung stehende Entlüftungsventile (18, 24) angeordnet sind, wovon jedes einen Ventilkolben (19, 25) umfasst, **dadurch gekennzeichnet, dass** der Kraftaufnehmer (10) ohne separates Zwischenelement in direkter Wirkverbindung mit dem Ventilkolben (19, 25) des jeweiligen Entlüftungsventils (18, 24) steht.

2. Ventileinrichtung (1) nach Anspruch 1, **dadurch gekennzeichnet, dass** der Kraftaufnehmer (10) zentral zwischen den Ventilkolben (19, 25) angeordnet ist.

3. Ventileinrichtung (1) nach Anspruch 1 oder 2, **dadurch gekennzeichnet, dass** die Ventileinrichtung (1) zwei Entlüftungsventile (18, 24) aufweist, deren beide Ventilkolben (19, 25) in einer Ebene mit dem Kraftaufnehmer (10) angeordnet sind.

4. Ventileinrichtung (1) nach einem der vorhergehenden Ansprüche, **dadurch gekennzeichnet, dass** der Kraftaufnehmer (10) mit radialen Fortsätzen (14, 15) versehen ist, wobei der jeweilige Fortsatz (14, 15) in eine Ausnehmung (21, 27) des jeweiligen Ventilkolbens (19, 25) eingreift.

5. Ventileinrichtung (1) nach Anspruch 4, **dadurch gekennzeichnet, dass** der Kraftaufnehmer (10) mitsamt den radialen Fortsätzen (14, 15) einstückig ausgebildet ist.

6. Ventileinrichtung (1) nach einem der vorhergehenden Ansprüche, wobei der Kraftaufnehmer (10) zwischen einer vorgeschobenen Ausgangsstellung und einer zurückgeschobenen Wirkstellung axial verschiebbar ist, und wobei der Kraftaufnehmer (10) in der Ausgangsstellung die Ventilkolben (19, 25) in einer vorgeschobenen Offenstellung zu halten bestrebt ist, während er in der Wirkstellung die Ventilkolben (19, 25) in einer zurückgeschobenen Schliessstellung zu halten bestrebt ist, und wobei der Kraftaufnehmer (10) mittels zumindest einer Feder (54) in Richtung seiner Ausgangsstellung belastet ist, **dadurch gekennzeichnet, dass** der Kraftaufnehmer (10) mit einer Druckfläche (16) versehen ist und die Ventileinrichtung (1) mit einem den Kraftaufnehmer (10) zumindest teilweise umgebenden Druckraum (59) versehen ist, der pneumatisch beaufschlagbar ist, um auf die Druckfläche (16) des Kraftaufnehmers (10) eine gegen die Federkraft gerichtete Kraft auszuüben und den Kraftaufnehmer (10) in seine Wirkstellung zu verschieben und/oder in der Wirkstellung zu halten.

7. Ventileinrichtung (1) nach einem der vorhergehenden Ansprüche, **dadurch gekennzeichnet, dass** der Kraftaufnehmer (10) einen zylindrischen Grundkörper (11) und einen zylindrischen Kopfteil (12) aufweist, wobei der Kopfteil (12) einen kleineren Durchmesser als der Grundkörper (11) besitzt, und wobei die Stirnfläche des Kopfteils (12) in den Entlüftungskanal (3) ragt.

8. Ventileinrichtung (1) nach Anspruch 6 und 7, **dadurch gekennzeichnet, dass** die Druckfläche (16) am Übergang von dem zylindrischen Grundkörper (11) zu dem zylindrischen Kopfteil (12) am Kraftaufnehmer (10) ausgebildet ist.

9. Ventileinrichtung (1) nach einem der vorhergehenden Ansprüche, **dadurch gekennzeichnet, dass** die Ventileinrichtung (1) eine in das Ventilgehäuse (2) integrierte Auslasskammer (30) aufweist, in welche der bzw. die Entlüftungskanäle münden, wobei die Auslasskammer (30) mit einem nach aussen führenden Flansch (33) verbunden ist.

10. Ventileinrichtung (1) nach einem der vorhergehenden Ansprüche, **dadurch gekennzeichnet, dass** die Ventileinrichtung eine federbelastete Druckplatte (37) aufweist, welche mit einer Vielzahl von Druckstangen (39) in Wirkverbindung steht, wobei die Druckstangen (39) im Ausgangszustand über die Frontfläche (40) des Gehäuses (2) vorstehen, und wobei die Druckstangen (39) beim Fixieren einer Verschlussplatte (56) an der Frontfläche (40) des Gehäuses (2) die Druckplatte (37) entgegen der Kraft der Druckfedern (38) nach hinten schieben und wobei die Druckplatte (37) beim Entfernen der Verschlussplatte (56) den Kraftaufnehmer (10) zusammen mit den Ventilkolben (19, 25) nach vorne in die Ausgangsstellung schieben.

11. Ventileinrichtung (1) nach einem der vorhergehenden Ansprüche, **dadurch gekennzeichnet, dass** der Kraftaufnehmer (10) einen axialen Hub zwischen 1 und 7 mm, insbesondere zwischen 3 und 5mm zurücklegt, um von der Ausgangsstellung und die Wirkstellung zu gelangen.

12. Ventileinrichtung (1) nach einem der vorhergehenden Ansprüche, **dadurch gekennzeichnet, dass** die Stirnseite des in den Entlüftungskanal (3) mündenden Kopfteils (12) des Kraftaufnehmers (10) einen Durchmesser zwischen 5 und 25mm aufweist.

13. Ventileinrichtung (1) nach einem der vorhergehenden Ansprüche, **dadurch gekennzeichnet, dass** der Entlüftungskanal (3) einen Einlasskanal (5) aufweist, der sich zu einer der Anzahl der Entlüftungsventile (18, 24) entsprechenden Anzahl von Ästen (7, 8) verzweigt, wobei der Kraftaufnehmer (10) im Bereich der Abzweigung (6) angeordnet ist und wobei im Bereich des Endes des jeweiligen Asts (7, 8) ein Entlüftungsventil (18, 24) angeordnet ist.

14. Ventileinrichtung (1) nach Anspruch 13, **dadurch gekennzeichnet, dass** der jeweilige Ast (7, 8) des Entlüftungskanals (3) mit zumindest zwei, insbesondere zumindest drei Umlenkungen versehen ist, wobei zumindest zwei Umlenkungen eine Richtungsänderung des eindringenden Giessmaterials um zumindest 60° bewirken.

15. Ventileinrichtung (1) nach Anspruch 13 oder 14, **dadurch gekennzeichnet, dass** der jeweilige Ast (7, 8) des Entlüftungskanals (3) mit zumindest einer in der Art einer Sackgasse ausgebildeten Materialauffangkammer (7a-7d; 8a-8d) für das vordringende Giessmaterial versehen ist.

16. Ventileinrichtung (1) nach einem der vorhergehenden Ansprüche, **dadurch gekennzeichnet, dass** in das Ventilgehäuse (2) eine Blockhülse (46) eingesetzt ist, welche aus einem härteren Material als das Ventilgehäuse (2) gefertigt ist und zur Aufnahme und Führung des Kraftaufnehmers (10) sowie der Ventilkolben (19, 25) ausgebildet ist.
